# EUROPEAN PATENT SPECIFICATION

(11) **EP 3 098 109 B1**
(45) Date of publication and mention of the grant of the patent: **24.01.2018**
(21) Application number: 16165726.7
(22) Date of filing: 18.04.2016
(51) Int. Cl.: B60L 15/20, B60W 10/08, B60K 6/445

(54) **VEHICLE CONTROL SYSTEM**
FAHRZEUGSTEUERUNGSSYSTEM
SYSTÈME DE COMMANDE DE VÉHICULE

(30) Priority: 28.04.2015 JP 2015091140
(43) Date of publication of application: 30.11.2016
(73) Proprietor: Toyota Jidosha Kabushiki Kaisha, Toyota-shi, Aichi-ken, 471-8571 (JP)
(72) Inventor: HIRAI, Makoto, TOYOTA-SHI, AICHI-KEN, 471-8571 (JP); OSHIUMI, Yasuhiro, TOYOTA-SHI, AICHI-KEN, 471-8571 (JP); AOKI, Takanori, TOYOTA-SHI, AICHI-KEN, 471-8571 (JP); HOKOI, Koji, TOYOTA-SHI, AICHI-KEN, 471-8571 (JP)
(74) Representative: Intès, Didier Gérard André

(56) References cited:
- JP-A- 2015 016 789
- US-A1- 2010 227 722
- US-A1- 2012 208 671

## Description

### BACKGROUND

### Field of the Disclosure

Embodiments of the present disclosure relate to the art of a control system for a vehicle having at least two motors for propelling the vehicle, and more particularly, to a vehicle control system for selecting an operating mode of the vehicle from a mode where the vehicle is powered by any one of the motors, and a mode where the vehicle is powered by both motors.

### Discussion of the Related Art

U.S. Pat. No. 5,788,006 describes a so-called "dual motor type" hybrid vehicle provided with an engine and two motors. In the hybrid vehicle taught by U.S. Pat. No. 5,788,006, the engine and the first motor are connected to a planetary gear unit functioning as a differential gear system, and the second motor is disposed between an output element of the differential gear system and driving wheels. An inverse rotation of the engine or an input element of the differential gear system connected thereto is halted by a brake.

The hybrid vehicle taught by U.S. Pat. No. 5,788,006 may be powered not only by the second motor while stopping the engine but also by both first motor and second motor. According to the teachings of U.S. Pat. No. 5,788,006, the second motor generates larger driving force during propelling the vehicle by both motors, and the first motor compensates for a deficiency of the required driving force.

U.S. Pat. No. 6,553,287 describes a control strategy for a hybrid electric vehicle. According to the teachings of U.S. Pat. No. 6,553,287, the controller starts the engine if an estimated sum of the torques of a traction motor and generator motor is less than the calculated sum of the torque output of the traction motor and the engine at any given speed. That is, the operating mode of the hybrid vehicle is also shifted to a mode in which it is possible to propel the vehicle by a large driving force when the required driving force exceeds the maximum possible output of the motor mode.

During propelling of the vehicle by one of the motors, the other stopped motor is started when a required driving force is increased. However, it takes some time to start the other motor by normal procedures, and hence the required driving force is achieved after a brief moment once the stopped motor has been started. In addition, if the driving force is increased abruptly by the other motor, shocks and rattling could be caused. In order to reduce such shocks and rattling, an increase rate of the driving force is processed in such a manner that the driving force is gradually rather than abruptly increased. However, if the increase rate of the driving force is thus moderated, achievement of the required driving force is also delayed. According to the teachings of U.S. Patents Nos. 5,788,006 and 6,553,287, the required driving force is achieved by increasing the output of the currently activated power source to the maximum value, and the other power source is started to compensate for a deficiency of the required driving force. According to the teachings of those documents, therefore, an actual driving force may temporarily fall short until the output of the newly started power source is increased to a required level.

### SUMMARY

Aspects of embodiments of the present disclosure have been conceived noting the foregoing technical problems, and it is therefore an object of embodiments of the present disclosure is to provide a control system for a vehicle having at least two motors that is configured to prevent a shortage of the driving force during shifting from single-motor mode to dual-motor mode.

A vehicle control system according to claim 1 is provided.

The vehicle may comprise a booster that boosts a voltage applied to the motors. In addition, the vehicle control system may be further configured to restrict a driving force to be generated by the first motor to a smaller value with a reduction in a maximum voltage applied to the motor or motors that are restricted by the booster.

The vehicle may further comprise a battery that supplies electric power to the motors. In addition, the vehicle control system may be further configured to calculate a maximum possible output of the battery, and to restrict a driving force generated by the first motor to a smaller value when the maximum possible output of the battery is restricted to a lower level.

The vehicle control system may be further configured to obtain a driving force of the first motor with reference to a predetermined map when starting the first motor to power the vehicle by both motors, and to calculate a driving force of the second motor based on the driving force of the first motor determined with reference to the map and the required driving force.

The map may include at least any of a map determining a relation between an output of the first motor and an energy loss, and a map determining the driving force to be generated by the first motor to achieve the required driving force by the first motor and the second motor.

The vehicle control system is configured to increase the driving force of the first motor in such a manner that an augmentation in the driving force of the first motor is delayed behind an increment in the required driving force, and to operate the second motor in such a manner to compensate for a deficiency in the driving force resulting from the delay in augmentation of the driving force of the first motor.

Thus, according to the invention, the first motor is started to shift the operating mode to the first mode when the required driving force exceeds the threshold value during propelling the vehicle under the second mode. To this end, the threshold value is set less than the maximum driving force of the second motor propelling the vehicle under the second mode. According to the invention, therefore, the driving force of the second motor can still be increased when shifting from the second mode to the first mode by starting the first motor, so that any deficiency in driving force of the first motor can be compensated by the second motor.

According to one aspect of the preferred example, the driving force of the first motor is restricted with a restriction of voltage boost by the booster. If the voltage boost is restricted, the driving force of the second motor is restricted and hence the aforementioned threshold value is set to a smaller value. In this case, the operating mode is shifted to the first mode even if the required driving force is not significantly increased. However, deficiency in the driving force resulting from the restriction on the driving force of the first motor may be covered by the second motor. For this reason, a frequency of generating the driving force to achieve the required driving force by the first motor may be decreased to limit damage on the first motor and rotary members of a powertrain.

According to another aspect of the preferred example, the driving force of the first motor is restricted with a restriction on the maximum output of the battery. If the output of the battery is restricted, the driving force of the second motor is also restricted and hence the aforementioned threshold value is set to a smaller value. Consequently, the operating mode is also shifted to the first mode even if the required driving force is not significantly increased. However, deficiency in the driving force resulting from the restriction on the driving force of the first motor may also be covered by the second motor. For this reason, a frequency of generating the driving force to achieve the required driving force by the first motor may be decreased to limit damage on the first motor and the rotary members of the powertrain.

That is, according to the preferred example, the operating mode is shifted from the second mode to the first mode by starting the first motor before the driving force of the second motor is increased to the maximum value so that the driving forces of the first motor and the second motor may be adjusted to achieve the required driving force during shifting of the operating mode from the second mode to the first mode. To this end, specifically, the driving force to be generated by the first motor is determined with reference to the map determining the driving force of the first motor taking account of an energy efficiency, an energy loss etc., and the driving force of the second motor is calculated based on the driving force thus determined with reference to the map and the required driving force. For this reason, the required driving force under the second mode can be achieved by both motors while reducing energy loss.

### BRIEF DESCRIPTION OF THE DRAWINGS

Features, aspects, and advantages of exemplary embodiments of the present disclosure will become better understood with reference to the following description and accompanying drawings, which should not limit the disclosure in any way.
Fig. 1 is a flowchart showing one control example according to the present disclosure;
Fig. 2 is a time chart showing changes in the driving forces of motors during execution of the control shown in Fig. 1;
Fig. 3 is a flowchart showing another control example according to the present disclosure;
Fig. 4 is one example of a map determining a relation between a speed of the first motor and the driving force when a voltage boost is restricted;
Fig. 5 is a flowchart showing still another control example according to the present disclosure;
Fig. 6 is a flowchart showing a control example for improving energy efficiency;
Fig. 7a is one example of a map determining a loss of the first motor, and Fig. 7b is one example of a map determining a loss of the second motor;
Fig. 8 is one example of a map determining a voltage loss;
Fig. 9 is a flowchart showing a control example for reducing calculations in the control for improving energy efficiency;
Fig. 10 is one example of a map determining a driving force to be generated by the first motor;
Fig. 11 is a schematic diagram showing one example of a powertrain of the hybrid vehicle to which the control system according to the preferred example is applied;
Fig. 12 is a block diagram showing one example of an electric circuit connecting the motors;
Fig. 13 is a nomographic diagram of the planetary gear unit serving as the power distribution device;
Fig. 14 is a map defining regions of the first mode and the second mode; and
Fig. 15 is a schematic diagram showing another example of a powertrain of the hybrid vehicle to which the control system according to the preferred example is applied.

### DETAILED DESCRIPTION OF THE PREFERRED EMBODIMENT(S)

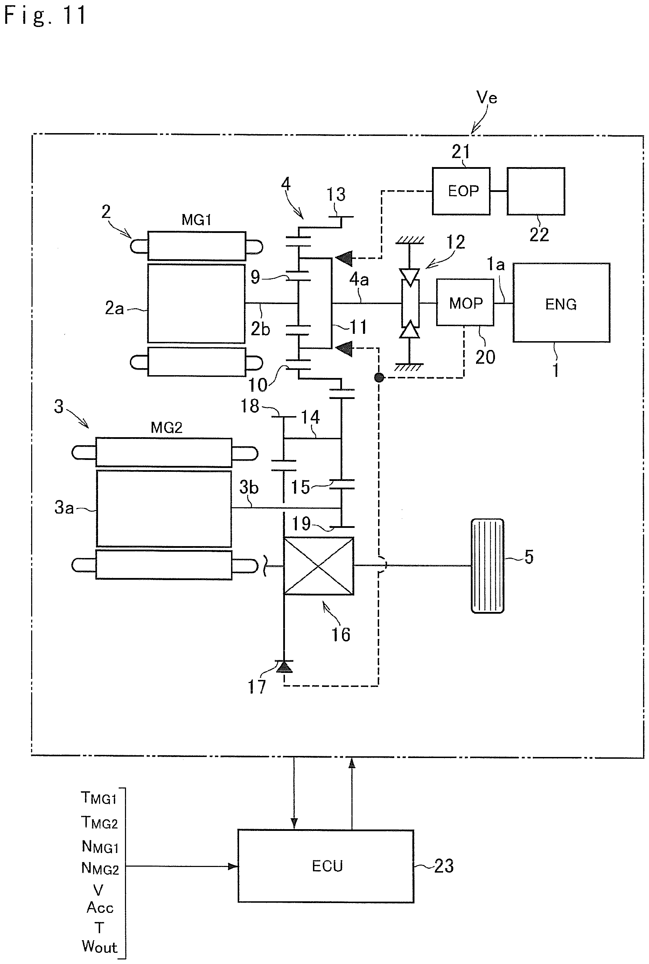

The vehicle control system according to the preferred example may be applied to a hybrid vehicle having an engine and at least two motors for propelling the vehicle or an electric vehicle powered by a battery or a fuel cell. Referring to Fig. 11, there is shown one example of a hybrid vehicle Ve having two motors, and an operating mode of the vehicle Ve can be selected from a single-motor mode and a dual-motor mode.

Specifically, as illustrated in Fig. 11, a prime mover of the vehicle Ve comprises an engine (ENG) 1, a first motor (MG1) 2, and a second motor (MG2) 3. In the vehicle Ve, a power of the engine 1 is distributed to the first motor 2 side and to driving wheels 5 side through a power distribution device 4. The second motor 3 can be activated by an electric power generated by the first motor 2, and the driving wheels 5 can be driven by a torque of the second motor 3.

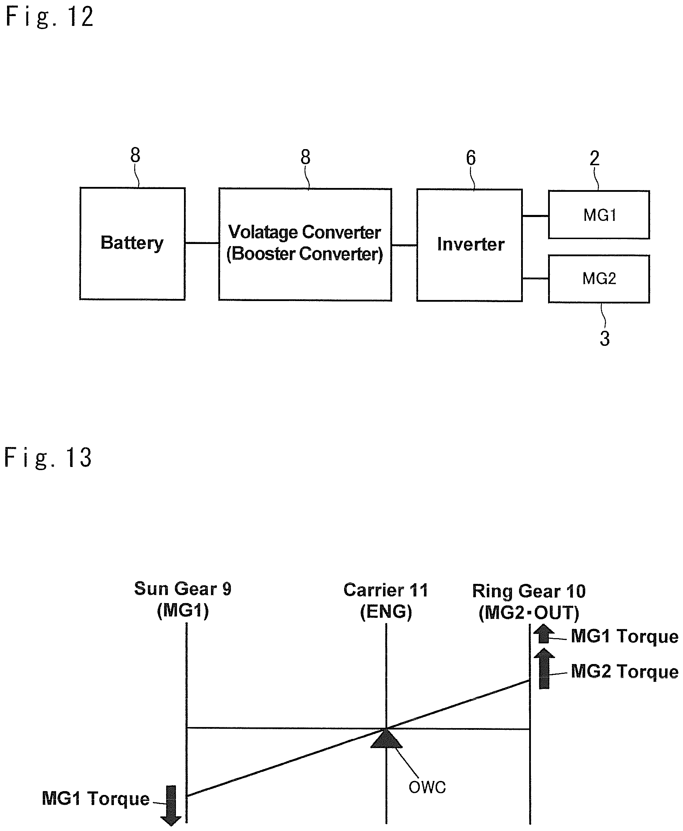

A permanent magnet type synchronous motor having a generating function is used individually as the first motor 2 and the second motor 3. As shown in Fig. 12, the first motor 2 and the second motor 3 are individually connected to an inverter 6, and the inverter 6 is connected to a battery 8 through a converter 7 serving as the claimed booster. As described later, an electronic control unit (to be abbreviated as the "ECU" hereinafter) is connected to the inverter 6 and the converter 7 to control a rotational speed, a torque a generation amount etc. of the motors 2 and 3.

The power distribution device 4 shown in Fig. 11 is a single-pinion planetary gear unit adapted to perform a differential action among three rotary elements such as a sun gear 9, a ring gear 10 and a carrier 11.

The power distribution device 4 is arranged coaxially with an output shaft 1a of the engine 1, and the first motor 2 is situated on an opposite side of the engine 1 across the power distribution device 4. The sun gear 9 of the power distribution device 4 is connected with a rotor shaft 2b rotated integrally with a rotor 2a of the first motor 2, and the carrier 11 is connected to an input shaft 4a of the power distribution device 4. The input shaft 4a is also connected to the output shaft 1a of the engine 1. In order to prevent an inverse rotation of the engine 1, a one-way clutch 12 is disposed on the output shaft 1a of the engine 1 while being fixed to a stationary member such as a housing, for example. To this end, a friction clutch and a dog brake may also be used instead of the one-way clutch 12.

The ring gear 10 is integrated with an output gear 13, and a countershaft 14 is arranged in parallel with a common rotational axis of the power distribution device 4 and the first motor 2. A counter driven gear 15 is fitted onto one of the end portions of the countershaft 14 (i.e., right side in Fig. 11) in such a manner to be rotated therewith while being meshed with the output gear 13. A counter drive gear 18 is fitted onto the other end portion of the countershaft 14 (i.e., left side in Fig. 11) in such a manner to be rotated therewith while being meshed with a ring gear 17 of a differential gear unit 16 serving as a final reduction. Thus, the ring gear 10 of the power distribution device 4 is connected to the driving wheels 5 through the output gear 13, the countershaft 14, the counter driven gear 15, the counter drive gear 18, and the deferential gear unit 16.

Torque of the second motor 3 can be added to torque transmitted from the power distribution device 4 to the driving wheels 5. To this end, the second motor 3 is arranged in parallel with the countershaft 14, and a reduction gear 19 connected to a rotor shaft 3b rotated integrally with a rotor 3a is meshed with the counter driven gear 15. That is, the ring gear 10 of the power distribution device 4 is connected to the driving wheels 5 and the second motor 3 through the aforementioned gear train or the reduction gear 19.

The vehicle Ve is provided with two oil pumps such as a mechanical oil pump (to be abbreviated as the "MOP "hereinafter) 20 and an electric oil pump (to be abbreviated as the "EOP "hereinafter) 21. In the example shown in Fig. 11, the MOP 20 is connected to the output shaft 1a of the engine 1 to be driven by the engine 1 to generate hydraulic pressure. Alternatively, the MOP 20 may also be disposed on the opposite side of the engine 1 across the first motor 2 while being connected to the input shaft 4a. In order to generate hydraulic pressure when the engine 1 is stopped, the EOP 21 is connected to a pump motor 22.

The vehicle Ve is provided with an electronic control unit (to be abbreviated as the "ECU" hereinafter) 23 as a microcomputer configured to carry out a calculation based on incident data and preinstalled data, and to transmit a calculation result in the form of a command signal. For example, torques (i.e., driving forces) Tmg1 and Tmg2 of the motors 2 and 3, rotational speeds Nmg1 and Nmg2 of the motors 2 and 3, a vehicle speed V, a required driving force represented by an opening degree Acc of an accelerator, a temperature T such as an external temperature or a temperature of cooling water for the inverter 6 and the converter 7, an available electric power W of the battery 8 and so on are sent to the ECU 23. In addition, maps installed in the ECU 23 to control the vehicle Ve are as follows: a map defining selecting regions of the operating mode from the single-motor mode, the dual-motor mode, and the hybrid mode; a map defining a voltage boost level based on the temperature T and an altitude above sea level; a map determining energy losses of the motors 2 and 3; a map determining an energy loss resulting from boosting voltage; a map determining a driving force to be generated by the first motor 2 based on an axle speed, the vehicle speed V or the rotational speed of the second motor 3, and the required driving force, and so on.

The vehicle Ve can be propelled under the electric vehicle mode (to be abbreviated as the "EV mode"). Rotational speeds of the rotary elements of the power distribution device 4 under the dual-motor mode of the EV mode are indicated in the nomographic diagram shown in Fig. 13. When the first motor 2 is rotated inversely to generate torque (indicated as "MG1 torque" in Fig. 13), a negative torque is applied to the carrier 11 connected to the engine 1. Consequently, the one-way clutch 12 is brought into engagement so that rotations of the carrier 11 and the engine 1 are halted, and that the carrier 11 is subjected to a reaction force. In this situation, the ring gear 10 integral with the output gear 13 is rotated in the forward direction by the output torque of the first motor 2. In addition, the output gear 13 is also rotated in the forward direction by the output torque of the second motor 3. Thus, under the dual-motor mode, the vehicle Ve is propelled by a total torque of the motors 2 and 3. By contrast, under the single-motor mode, the vehicle Ve is powered only by the first motor 2 and hence the maximum drive torque under the single-motor mode is less than that under the dual-motor mode. Under the single-motor mode, the MG1 torque in Fig. 13 is reduced to zero. In this case, if a resistance of the engine 1 is large and the torque acting on the sun gear 9 is greater than a cogging torque of the first motor, the rotary elements of the power distribution device 4 are rotated at the speeds indicated in Fig. 13.

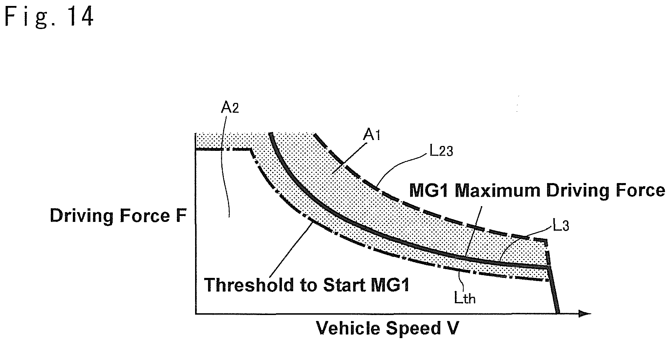

As shown in Fig. 14, the operating regions to select the dual-motor mode as the first mode and the single-motor mode as the second mode are defined based on the vehicle speed V and the driving force F. Specifically, the first mode is selected if an operating point of the vehicle determined based on the vehicle speed V and the driving force F falls within a region A1 between a line L23 representing a total value of the driving forces generated by the motors 2 and 3, and a line Lth as a threshold from which the first motor 2 is started to assist the driving force. By contrast, the second mode is selected if the aforementioned operating point falls within the region A2 where the vehicle speed V is lower and the driving force F is smaller. The maximum driving force of the second motor 3 is greater than the threshold value Lth to start first motor 2 as represented by a line L3. As indicated by the lines L23, Lth and L3, torques of the motors 2 and 3 gradually decrease with an increase in the vehicle speed.

Thus, according to the preferred example, the threshold value to start first motor 2 to shift to the first mode is set less than the maximum driving force of the second motor 3 propelling the vehicle under the second mode.

When the first motor 2 is started to increase the driving force, the startup of the first motor 2 is delayed inevitably by various factors such as data processing, data transmission, moderate processing or late processing of a change in the driving force toward a target value and so on. For this reason, the actual driving force of the first motor 2 cannot be increased to the target value just after the startup. In order to compensate for deficiency of driving force of the first motor 2 by the second motor 3, according to the preferred example, the threshold value to start the first motor 2 is set in such a manner that the startup of the first motor 2 is commenced when the driving force generated by the second motor 3 can still be increased. In other words, the difference between the line Lth and the line L3 is set at least in such a manner that that the driving force of the second motor 3 is increased to the maximum value when the first motor 2 starts generating the target driving force.

That is, the difference between the line Lth and the line L3 may be adjusted in accordance with a delay in the startup of the first motor 2 detected by experimentation or simulation. However, if the difference between the line Lth and the line L3 is too wide, the region A1 where the dual-motor mode is selected is enlarged more than necessary and hence the first motor 2 would be started unnecessarily even if the vehicle may be propelled only by the second motor 3. Consequently, an electrical loss would be increased. In order to reduce such electrical loss, it is preferable to reduce the difference between the line Lth and the line L3 to the minimum difference possible to compensate for the deficiency of driving force during startup of the first motor 2.

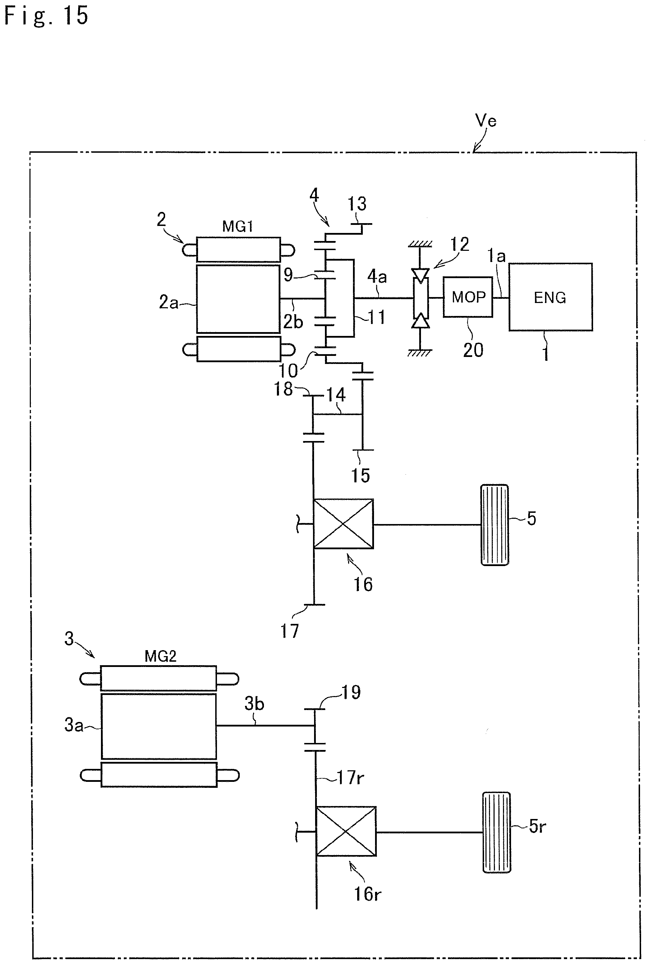

The vehicle control system according to the preferred example may also be applied to the hybrid vehicle shown in Fig. 15. In the hybrid vehicle Ve shown in Fig. 15, the second motor 3 is connected to a ring gear 17r of a deferential gear unit 16r connected to rear wheels 5r. That is, in the hybrid vehicle Ve, both front and rear axles are powered under the first mode, and only the rear axle is powered under the second mode.

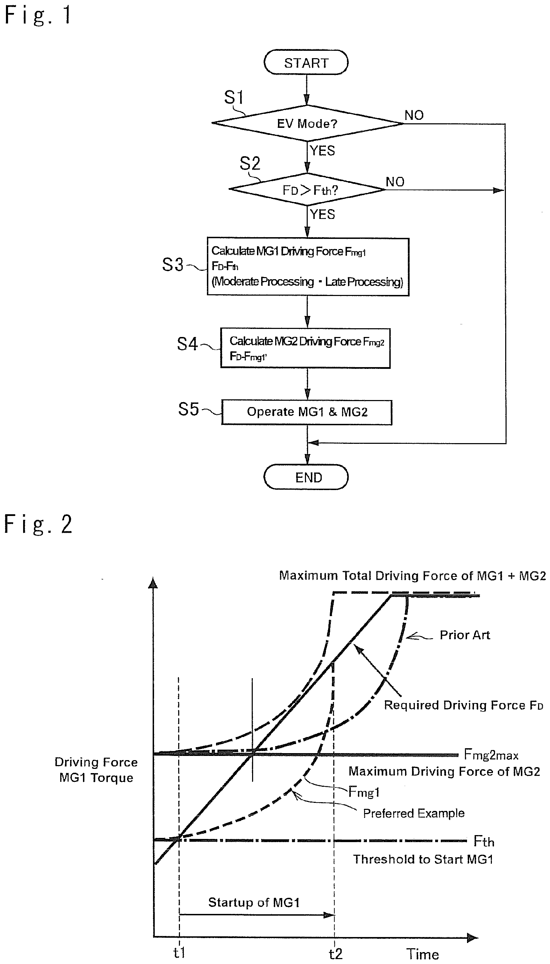

Turning to Fig. 1, there is shown an example of the shifting control to the first mode as the dual-motor mode to be carried out when the accelerator pedal is depressed to increase the driving force under the second mode (i.e., single-motor mode). Specifically, the routine shown in Fig. 1 is executed during propulsion of the vehicle Ve or when the vehicle Ve is in Ready-on state. At step S1, it is determined whether or not the vehicle Ve is propelled under the EV mode while stopping the engine 1. Such determination at step S1 may be made based on a transmission of the command signal to the engine 1, the inverter 6 or the converter 7. Alternatively, the determination at step S1 may also be made based on satisfaction of conditions to propel the vehicle Ve under the EV mode, specifically, based on a fact that the required driving force is small.

If the vehicle Ve is not propelled under the EV mode, the routine is returned without carrying out any specific control. By contrast, if the vehicle Ve is propelled under the EV mode, the routine advances to step S2 to determine whether or not a required driving force FD is greater than the threshold value Fth of the driving force to start the first motor 2. To this end, the required driving force FD may be calculated based on an opening degree Acc of the accelerator and a vehicle speed V, and the threshold value Fth is determined with reference to the map shown in Fig. 14 where the threshold value Fth is determined along the line Lth. As described, the threshold value Fth is set less than the maximum driving force to be generated by the second motor 3. That is, according to the preferred example, the first motor 2 is started to assist the driving force before the required driving force FD is increased to the maximum driving force possible for second motor 3.

If the required driving force FD is less than the threshold value Fth, the routine is returned without carrying out any specific control. By contrast, if the required driving force FD is greater than the threshold value Fth, the routine advances to step S3 to calculate a target driving force Fmg1 to be generated by the first motor 2. In this case, the vehicle Ve is powered only by the driving force of the second motor 3 that is greater than the threshold value Fth, and hence the target driving force Fmg1 can be calculated by subtracting the threshold value Fth from the required driving force FD. Then, in order to increase the driving force Fmg1 of the first motor 2 smoothly to the target value without changing abruptly, a command driving force Fmg1' is obtained by applying the moderate processing or the late processing (or a rounding process or a first order lagging process) to the target driving force Fmg1. In the following explanation, both the target driving force Fmg1 and the command driving force Fmg1' of the first motor 2 will be called the driving force "Fmg1" for the sake of convenience.

Then, a target driving force Fmg2 of the second motor 3 is calculated at step S4. As described, according to the conventional art, a deficiency of driving force is compensated by starting the stopped motor after the driving force generated by the motor propelling the vehicle under the single-motor mode is increased to the upper limit. That is, according to the conventional art, the driving force of the motor propelling the vehicle under the single-motor mode cannot be further increased when shifting to the dual-motor mode. By contrast, according to the preferred example, the first motor 2 is started before the driving force of the second motor 3 reaches the upper limit so that the driving force of the second motor 3 can still be changed during shifting to the first mode while taking account of an augmented driving force resulting from the addition of first motor 2. To this end, at step S4, the target driving force Fmg2 of the second motor 3 is calculated by subtracting the command driving force Fmg1' calculated at step S3 from the required driving force FD. Then, the motors 2 and 3 are controlled in such a manner to generate the target driving force Fmg1 and Fmg2 at step S5, and the routine is ended.

Turning to Fig. 2, there are shown temporal changes in the driving forces Fmg1 and Fmg2 of the motors 2 and 3 with a change in the required driving force FD during execution of the control shown in Fig. 1. As described, according to the preferred example, the threshold value Fth to start first motor 2 during propulsion of the vehicle under the second mode is set less than the maximum driving force Fmg2max of the second motor 3. When the required driving force FD exceeds the threshold value Fth at point t1, the startup of the first motor 2 is commenced.

As described, the target driving force Fmg1 is calculated by subtracting the threshold value Fth from the required driving force FD, and subjected to the moderate processing or the late processing to obtain the command driving force Fmgl'. Therefore, as indicated by the dashed line in Fig. 2, an increment in the driving force Fmg1 is delayed from an augmentation of the required driving force FD. That is, at point t1, the required driving force FD cannot be achieved by merely adding the command driving force Fmg1' of the first motor 2 to the current driving force Fmg2 of the second motor 3. According to the preferred example, however, the driving force Fmg2 of the second motor 3 can still be increased to compensate for the deficiency of driving force resulting from the aforementioned delay in augmentation of the driving force Fmg1 of the first motor 2. To this end, specifically, the second motor 3 generates the target driving force Fmg2 calculated at step S4 taking into account the delay in startup of the first motor 2 by subtracting the command driving force Fmg1' from the required driving force FD. For this reason, according to the preferred example, the required driving force (i.e., Fmg1 + Fmg2) can be achieved without delay during shifting from the second mode to the first mode even if the augmentation in the driving force Fmg1 of the first motor 2 is delayed.

The driving force Fmg1 of the first motor 2 is increased gradually, and eventually the target value as the difference between the required driving force FD and the threshold value Fth is achieved at point t2. According to the preferred example, the difference between the maximum driving force Fmg2max of the second motor 3 and the threshold value Fth is wider than the difference between the maximum driving force Fmg2max and the required driving force FD at point t2. For this reason, even if the required driving force FD at point t2 is higher than the maximum driving force Fmg2max of the second motor 3, the driving force Fmg2 of the second motor 3 can still be increased to compensate for the deficiency of driving force resulting from the aforementioned delay in augmentation of the driving force Fmg1 of the first motor 2. After point t2, the driving force Fmg1 of the first motor 2 can be increased without delay behind the change in the required driving force FD so that the required driving force can be achieved by the motors 2 and 3 without delay.

In Fig. 2, the dashed curve representing the change in the driving force Fmg1 of the first motor 2 during startup is also drawn above the line representing the maximum driving force Fmg2max of the second motor 3 to indicate a total driving force of Fmg1 and Fmg2 of the motors 2 and 3. As can be seen from Fig. 2, the dashed curve representing the total driving force of the motors 2 and 3 is situated higher than the line representing the required driving force FD. This means that the required driving force FD can be achieved by the motors 2 and 3 without delay. That is, the above-explained difference between the maximum driving force Fmg2max of the second motor 3 and the threshold value Fth to start the first motor 2 is set to achieve the required driving force FD without delay. Thus, the difference between the dashed curve represents the total driving force of the motors 2 and 3 and the line representing the required driving force FD represents an allowable total driving force possible to be generated by the motors 2 and 3.

In Fig. 2, the dashed-dotted curve represents the driving force increased by starting the first motor 2 after the required driving force FD reaches the maximum driving force Fmg2max of the second motor 3 as has conventionally been done. That is, the dashed-dotted curve also represents the total driving force of Fmg1 and Fmg2 of the motors 2 and 3, but it is situated below the line representing the required driving force FD. This means that the driving force drops temporarily and hence the required driving force FD cannot be achieved by the conventional procedure without delay.

Thus, according to the preferred example, the first motor 2 is started before the required driving force FD reaches the maximum driving force Fmg2max of the second motor 3 to shift the operating mode from the second mode as the single-motor mode to the first mode as the dual-motor mode. According to the preferred example, therefore, a temporal drop in the driving force can be prevented during shifting from the second mode to the first mode even if the augmentation of the driving force Fmg1 of the first motor 2 is delayed.

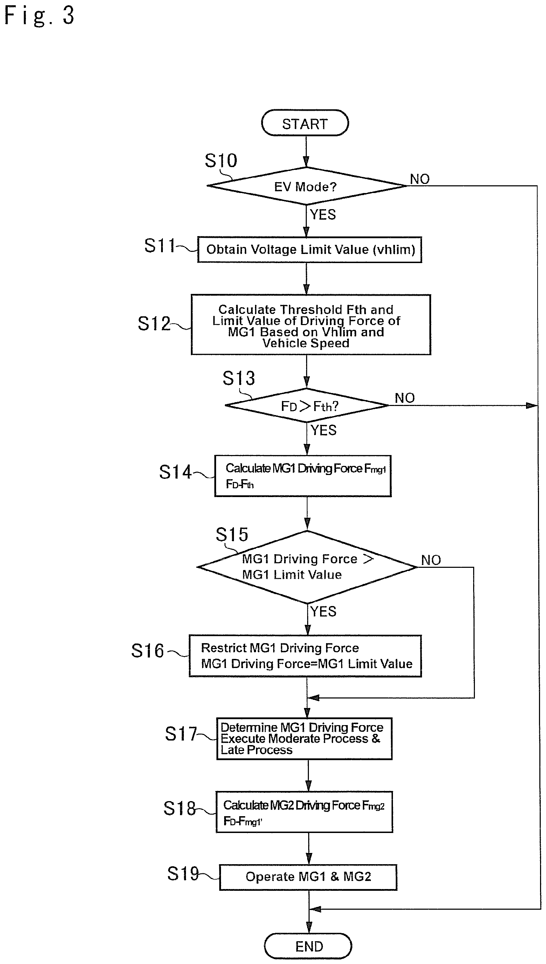

Another control example with reference to Fig. 3 will now be explained. According to the foregoing preferred example, the motor stopping under the single-motor mode is started upon exceeding the threshold value of the driving force that is set less than the maximum driving force of the motor propelling the vehicle under the single-motor mode. However, if the temperature is too low or an altitude of the vehicle is too high, the voltage of the battery cannot be boosted sufficiently. In those cases, the maximum driving force of the motor propelling the vehicle has to be restricted, and hence the aforementioned threshold value Fth is set to a smaller value. Consequently, the first motor 2 has to be started earlier even if the required driving force FD has not yet increased to the above-explained level, and the driving force Fmg1 is increased to achieve the required driving force FD. However, in the hybrid vehicle Ve shown in Fig. 11 or 15, the first motor 2 is used mainly to control the speed of the engine 1, and gears, shafts, bearings etc. of the powertrain for delivering torque of the first motor 2 are designed to be suitable for the speed control of the engine 1. In addition, the driving force of the first motor 2 to power the vehicle Ve required under the first mode is greater than the driving force for controlling the speed of the engine 1. In this situation, the rotary members of the powertrain for delivering torque of the first motor 2 may be damaged. In order to limit the damage to the powertrain, the vehicle control system may also be configured to execute the following control.

As described, according to the preferred example, the driving forces Fmg1 and Fmg2 of the motors 2 and 3 may be adjusted in such a manner to achieve the required driving force FD during shifting from the second mode to the first mode. The control example shown in Fig. 3 is configured to decrease frequency of generating the driving force to achieve the required driving force by the first motor 2 by utilizing such flexibility of adjustment of the driving forces.

As the example shown in Fig. 1, at step S10, it is determined whether or not the vehicle Ve is propelled under the EV mode. If the vehicle Ve is not propelled under the EV mode, the routine is returned without carrying out any specific control. By contrast, if the vehicle Ve is propelled under the EV mode, the routine advances to step S11 to obtain a voltage limit value vhlim. As shown in Fig. 12, the output voltage of the battery 8 is boosted by the converter 7 and then delivered from the inverter 6 to the motors 2 and 3. In order to protect the converter 7, the limit value vhlim to boost the voltage is restricted to the lower level in accordance with a temperature drop and/or an increase in altitude. At step S11, specifically, the limit value vhlim to boost the voltage is determined with reference to a map determining the limit value vhlim based on a temperature T and an altitude above the sea level.

Then, the threshold value Fth to start the first motor 2 and a limit value of the driving force of the first motor 2 are calculated at step S12 based on the voltage limit value vhlim and the vehicle speed V. As described, the voltage limit value vhlim is restricted to the lower level in accordance with a temperature drop and/or an increase in altitude, and consequently, the maximum driving force Fmg2max of the second motor 3 is restricted to the lower level in accordance with such reduction in the voltage limit value vhlim. Meanwhile, the threshold value Fth is set to be lower than the maximum driving force Fmg2max of the second motor 3 while taking account of the aforementioned delay in augmentation of the driving force of the first motor 2. Thus, the maximum driving force Fmg2max of the second motor 3 is determined based on the limit value vhlim to boost the voltage, and the threshold value Fth is determined based on the maximum driving force Fmg2max of the second motor 3.

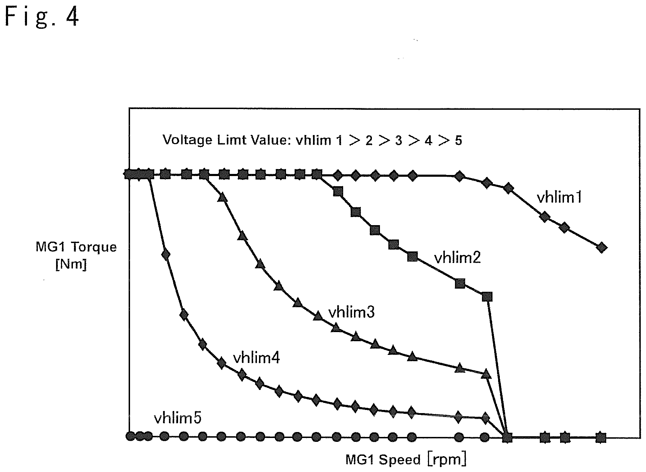

In order to decrease the frequency of the first motor 2 being subjected to a significant load, the driving force Fmg1 of the first motor 2 is restricted to the lower value with an increase in such restriction of the voltage. To this end, a relation between the driving force Fmg1 of the first motor 2 and the voltage limit value vhlm is determined in the form of map shown in Fig. 4 based on result of experimentation or simulation. As can be seen from Fig. 4, the driving force Fmg1 (i.e., a torque) of the first motor 2 is gradually reduced in the high speed range in accordance with a reduction in the voltage limit value vhlm (i.e., a magnitude of restriction). That is, an operating point of the first motor 2 is shifted to the low power side with a reduction in the voltage limit value vhlm to reduce the driving force of the first motor 2.

Then, at step S13, the required driving force FD is compared to the threshold value Fth calculated at step S12. As the example shown in Fig. 1, if the required driving force FD is less than the threshold value Fth, the routine is returned without carrying out any specific control. By contrast, if the required driving force FD is greater than the threshold value Fth, the routine advances to step S14 to calculate the target driving force Fmg1 of the first motor 2 by subtracting the threshold value Fth from the required driving force FD.

Then, the routine advances to step S 15 to determine whether or not the target driving force Fmg1 of the first motor 2 calculated at step S14 is greater than the limit value of the driving force Fmg1 of the first motor 2. If the target driving force Fmg1 of the first motor 2 is greater than the limit value, the driving force to be generated by the first motor 2 is restricted to the limit value at step S16. In this case, alternatively, a control amount of the driving force of the first motor 2 may be restricted in such a manner so as not to increase the driving force of the first motor 2 greater than the limit value. By contrast, if the target driving force Fmg1 of the first motor 2 is less than the limit value, the target driving force Fmg1 of the first motor 2 calculated at step S14 is employed as the target value or the control amount.

Consequently, the driving force Fmg1 to be generated by the first motor 2 is restricted to the above-mentioned limit value at step S17 in any of these cases. At step S 17, in addition, the target driving force Fmg1 thus determined is subjected to the moderate processing or the late processing to obtain the command driving force Fmg1' as in the foregoing step S3. Then, the target driving force Fmg2 of the second motor 3 is calculated by subtracting the command driving force Fmg1' from the required driving force FD at step S18, and the motors 2 and 3 are controlled in such a manner to generate the target driving force Fmg1 and Fmg2 at step S19.

Thus, according to the control example shown in Fig. 3, the threshold value Lth to start the first motor 2 is set to a smaller value if the voltage boost is restricted. In this case, the first motor 2 is started based on the relatively small required driving force FD and hence the frequency of large driving force generation by the first motor 2 to propel the vehicle is increased. According to the control example shown in Fig. 3, however, the target driving force Fmg1 of the first motor 2 is restricted to the smaller value in response to the restriction of the voltage. For this reason, the load applied to the first motor 2 is lightened so that damage on the transmission members of the powertrain can be limited.

As described, according to the control example shown in Fig. 3, the target driving force Fmg2 of the second motor 3 is also calculated by subtracting the command driving force Fmg1' from the required driving force FD. That is, if the target driving force Fmg1 of the first motor 2 is restricted, the second motor 3 compensates for the reduction in the driving force Fmg1 of the first motor 2. Specifically, the first motor 2 is started to shift the operating mode to the first mode before the required driving force FD reaches the maximum driving force Fmg2max of the second motor 3. In this situation, a ratio of the driving force to be generated by the first motor 2 to the driving force to be generated by the second motor 3 may be adjusted to achieve the required driving force FD. For this reason, deficiency in the driving force of the first motor 2 can be compensated by the second motor 2 to achieve the required driving force FD while limiting damage on the powertrain.

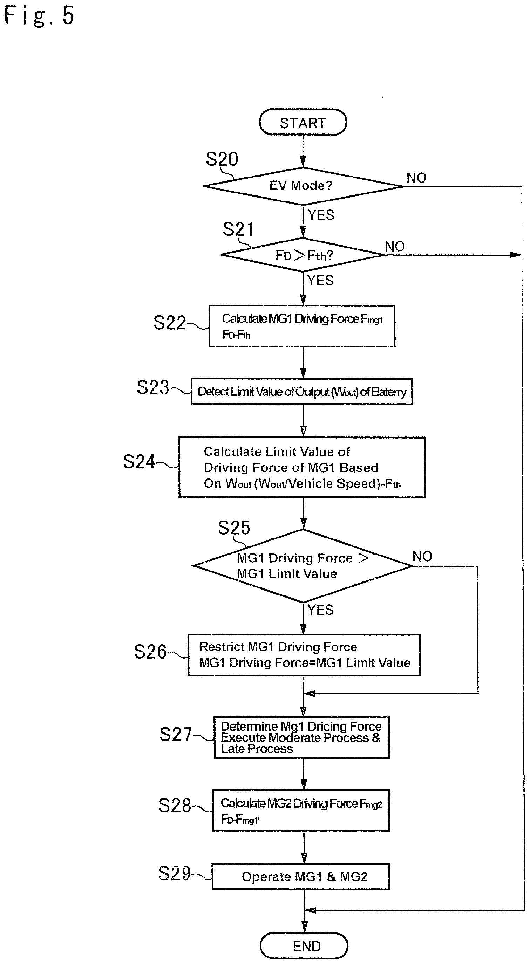

The driving forces of the motors 2 and 3 may also be restricted depending on a possible output power Wout of the battery 8. Turning now to Fig. 5, there is shown a control example to be carried out when the output power Wout of the battery 8 is restricted due to a temperature drop and/or a reduction in a state of charge (abbreviated as the "SOC" hereinafter) of the battery 8. The routine shown in Fig. 5 may be executed not only independent of the routines shown in Figs. 1 and 3 but also simultaneously with the routines shown in Figs. 1 and 3. As the foregoing control examples, at step S20, it is determined whether the vehicle Ve is propelled under the EV mode. If the vehicle Ve is not propelled under the EV mode, the routine is returned without carrying out any specific control. By contrast, if the vehicle Ve is propelled under the EV mode, the routine advances to step S21 to determine whether a required driving force FD is greater than the threshold value Fth of the driving force to start the first motor 2. Such determination at step S21 may be made by the same procedures as the foregoing steps S2 in Fig. 1 and S13 in Fig. 3.

If the required driving force FD is less than the threshold value Fth, the routine is returned without carrying out any specific control. By contrast, if the required driving force FD is greater than the threshold value Fth, the routine advances to step S22 to calculate the target driving force Fmg1 of the first motor 2 by subtracting the threshold value Fth from the required driving force FD. Then, at step S23, a limit value of an output power Wout of the battery 8, in other words, a restricted value of the output power Wout of the battery 8 is detected based on a voltage, a temperature, an SOC and so on of the battery 8.

Then, a limit value of the driving force Fmg1 of the first motor 2 is calculated at step S24. To this end, specifically, a maximum driving force possible to be generated by the current output power Wout of the battery 8 is calculated by dividing the output power Wout by the vehicle speed V, and the limit value of the driving force Fmg1 of the first motor 2 is calculated by subtracting the threshold value Lth from the maximum driving force thus calculated.

Subsequent steps of the routine shown in Fig. 5 are identical to those of the routine shown in Fig. 3. Specifically, the routine advances to step S25 to determine whether or not the target driving force Fmg1 of the first motor 2 calculated at step S22 is greater than the limit value of the driving force Fmg1 of the first motor 2 calculated at step S24. If the target driving force Fmg1 of the first motor 2 is greater than the limit value, the driving force to be generated by the first motor 2 is restricted to the limit value at step S26. By contrast, if the target driving force Fmg1 of the first motor 2 is less than the limit value, the target driving force Fmg1 of the first motor 2 calculated at step S44 is employed as the target value. Consequently, the driving force Fmg1 to be generated by the first motor 2 is restricted to the above-mentioned limit value at step S27 in any of these cases, and the target driving force Fmg1 thus determined is subjected to the moderate processing or the late processing to obtain the command driving force Fmg1'. Then, the target driving force Fmg2 of the second motor 3 is calculated by subtracting the command driving force Fmg1' from the required driving force FD at step S28, and the motors 2 and 3 are controlled in such a manner to generate the target driving force Fmg1 and Fmg2 at step S29.

Thus, according to the control example shown in Fig. 5, the first motor 2 is started to shift the operating mode to the first mode before the required driving force FD reaches the maximum driving force Fmg2max of the second motor 3, and hence the driving forces Fmg1 and Fmg2 of the motors 2 and 3 may be adjusted in this situation. That is, the driving force Fmg1 of by the first motor 2 may be restricted to reduce power consumption when the output power Wout of the battery 8 is restricted. In addition, frequency of generating the driving force to achieve the required driving force by the first motor 2 may also be decreased to limit damage on the powertrain, and deficiency in the driving force of the first motor 2 may also be compensated by the second motor 2 to achieve the required driving force FD.

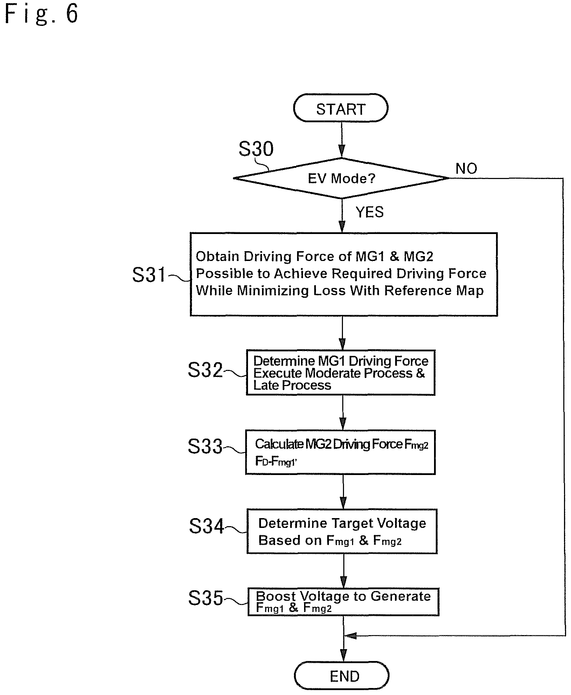

As has been explained, the vehicle control system according to the preferred example is thus configured to start the first motor 2 to shift the operating mode to the first mode before the required driving force FD reaches the maximum driving force Fmg2max of the second motor 3. In other words, to start the first motor 2 under the condition that the driving force of the second motor propelling the vehicle is not yet restricted. According to the preferred example, therefore, operating points of the motors 2 and 3 determined based on a speed and a torque (or a driving force) may also be optimized during shifting the operating mode from the second mode to the first mode so as to improve energy efficiency as shown in Fig. 6.

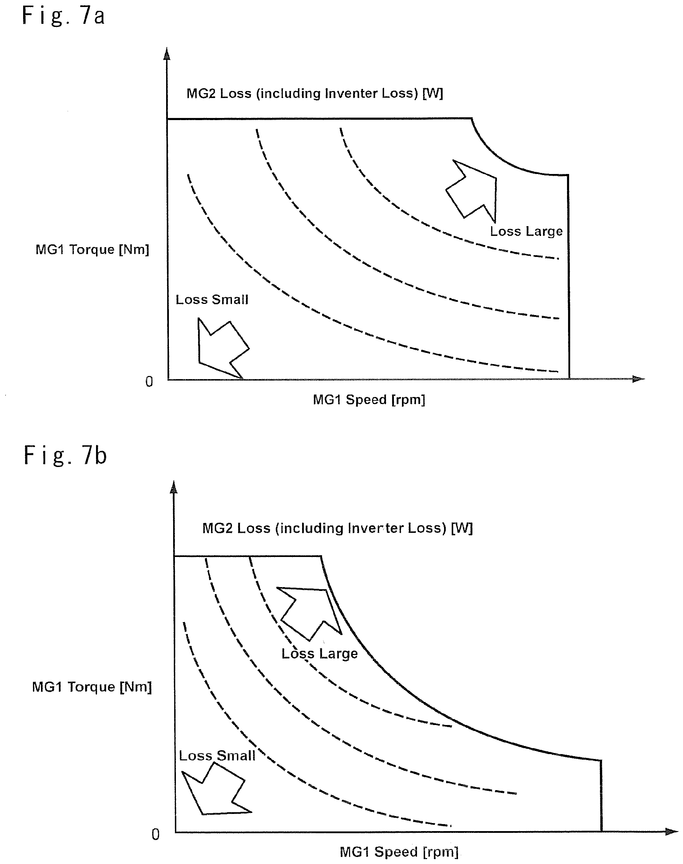

As in the foregoing control examples, at step S30, it is determined whether or not the vehicle Ve is propelled under the EV mode. If the vehicle Ve is not propelled under the EV mode, the routine is returned without carrying out any specific control. By contrast, if the vehicle Ve is propelled under the EV mode, the routine advances to step S31 to obtain the driving forces Fmg1 and Fmg2 of the motors 2 and 3 that can achieve the required driving force FD while minimizing an energy loss. A relation between the driving force and a speed of each motor 2 and 3 is determined during the design phase, and a power loss (or an energy loss) caused by friction, Joule heating etc. at each operating point is governed by a structure and/or configuration of an electric circuit. In order to carry out the calculation of step S31, losses of each motor 2 and 3, the inverter 6 and the converter 7 are determined in the form of map based on a driving force and a speed. At step S31, specifically, the driving forces Fmg1 and Fmg2 of the motors 2 and 3 that can achieve the required driving force FD while minimizing an energy loss are obtained with reference to those maps. One example of a map for determining a loss of the first motor 2 is shown in Fig. 7a, and one example of a map for determining a loss of the second motor 3 is shown in Fig. 7b.

The driving force Fmg1 of the first motor 2 thus obtained is also subjected to the moderate processing or the late processing to obtain the command driving force Fmg1' at step S32, and the command driving force Fmg1' is employed as a target driving force of the first motor 2. Then, the target driving force Fmg2 of the second motor 3 is calculated by subtracting the command driving force Fmg1' from the required driving force FD at step S33.

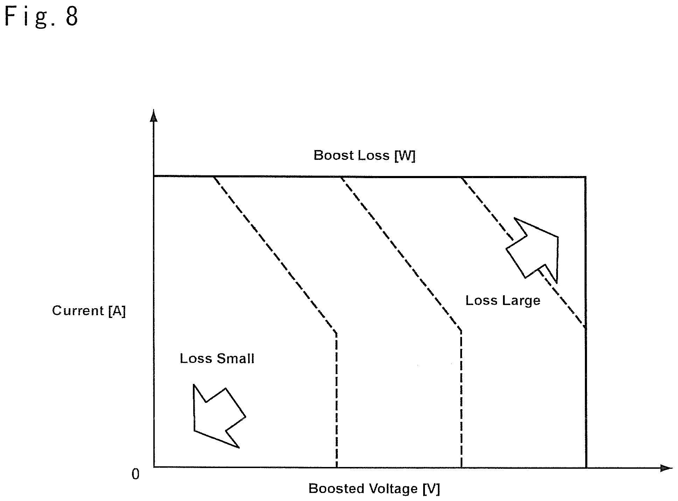

Then, a target voltage to achieve the driving forces Fmg1 and Fmg2 of the motors 2 and 3 while minimizing the energy loss is obtained at step S34 with reference to the aforementioned maps determining losses of each motor 2 and 3, the inverter 6 and the converter 7. One example of a map for determining a boost loss of the voltage is shown in Fig. 8. Then, at step S35, the converter 7 is controlled in such a manner to boost the voltage to generate the driving forces Fmg1 and Fmg2 by the motors 2 and 3.

Thus, according to the control example shown in Fig. 6, the motors 2 and 3 and the converter 7 can be operated in an optimally energy efficient manner during shifting the operating mode from the second mode to the first mode. For this reason, electric consumption can be reduced to extend a travelling distance of the hybrid vehicle under the EV mode and hence fuel efficiency can be improved.

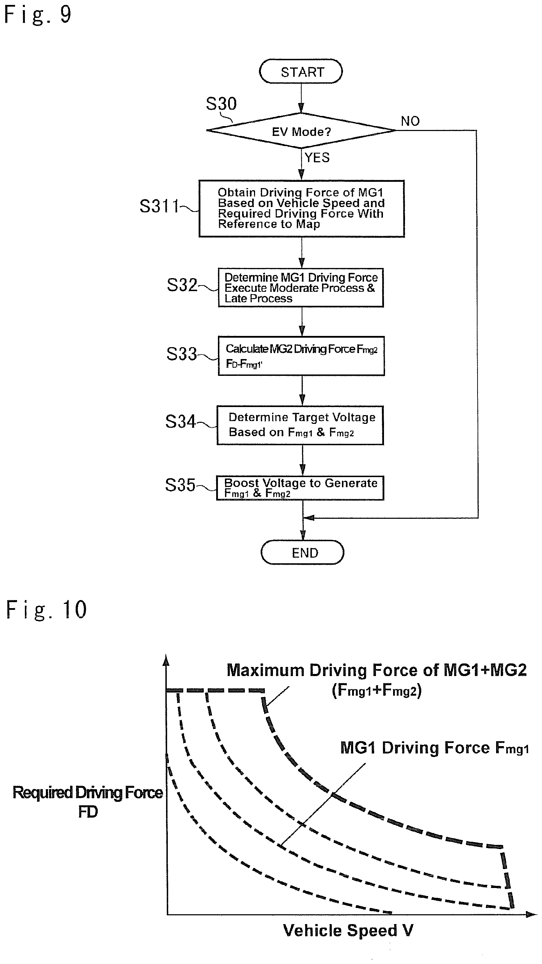

According to the control example shown in Fig. 6, the driving forces Fmg1 and Fmg2 of the motors 2 and 3 are calculated sequentially. That is, a calculation load is increased and a large amount of data has to be stored. In order to lighten the load of such calculations, the routine shown in Fig. 6 may be modified into the routine shown in Fig. 9.

According to the control example shown in Fig. 9, the driving forces Fmg1 and Fmg2 of the motors 2 and 3 are obtained with reference to a map at step S311 instead of calculating the driving forces Fmg1 and Fmg2 sequentially. The remaining steps are identical to those of the routine shown in Fig. 6. In this case, if the vehicle Ve is propelled under the EV mode, the routine advances to step S311 to obtain the driving force Fmg1 of the first motor 2 with reference to a map shown in Fig. 10 for determining the driving force Fmg1 of the first motor 2 based on the vehicle speed V and the required driving force FD.

As described, a relation between the driving force and a speed of each motor 2 and 3 is determined depending on specifications, and an energy loss is governed by a structure and/or configuration of an electric circuit. In order to obtain the driving force Fmg1 of the first motor 2 at step S311, the driving forces Fmg1 and Fmg2 of the motors 2 and 3 are determined in the form of map shown in Fig. 10. Specifically, as can be seen from Fig. 10, the driving force Fmg1 of the first motor 2 is determined based on the vehicle speed V and the required driving force FD in an optimally energy efficient manner.

The driving force Fmg1 of the first motor 2 thus obtained is also subjected to the moderate processing or the late processing to obtain the command driving force Fmg1' at step S32, and the command driving force Fmg1' is employed as a target driving force of the first motor 2. Then, the target driving force Fmg2 of the second motor 3 is calculated by subtracting the command driving force Fmg1' from the required driving force FD at step S33. Thereafter, the target voltage to achieve the driving forces Fmg1 and Fmg2 of the motors 2 and 3 is obtained at step S34, and the converter 7 is controlled at step S35 in such a manner to boost the voltage to generate the driving forces Fmg1 and Fmg2 by the motors 2 and 3.

According to the control example shown in Fig. 5, therefore, a load on the control system to carry out the calculation of the driving force Fmg1 of the first motor 2 sequentially can be lightened, in addition to the advantages of the example shown in Fig. 6.

Thus, according to the preferred example, the driving forces Fmg1 and Fmg2 as well as the operating points of the motors 2 and 3 may be adjusted when starting the first motor 2 to shift the operating mode from the second mode to the first mode. For this purpose, output torques of the first motor 2 and the second motor 3, a ratio of the driving force of the first motor 2 to the driving force of the second motor 3 to achieve the maximum driving force to propel the vehicle and so on may also be determined in the form of map. In the map, a speed of a propeller shaft (not shown), the first motor 2, or the second motor 3 may also be employed instead of the vehicle speed V, and a required torque of the propeller shaft, the opening degree Acc of the accelerator, a load factor as a ratio of the required driving force to the maximum driving force to propel the vehicle may be employed instead of the required driving force FD.

Lastly, the foregoing control examples may be executed not only independently from one another but also in combination as long as not in conflict.

## Claims

1. A vehicle comprising a prime mover, the prime mover (1) including at least a first motor (2) and a second motor (3); and
a control system configured to enable selection of an operating mode from a first mode where the vehicle is powered by both motors (2, 3) and a second mode where the vehicle is powered only by the second motor (3), based on a required driving force,
**characterized in that**:
the vehicle control system is configured to start the first motor (2) to shift the operating mode to the first mode when a threshold value of a required driving force under the second mode is exceeded;
the threshold value is set less than a maximum driving force of which the second motor (3) propelling the vehicle is capable of generating under the second mode; and **in that** following to the shift to the first mode, the vehicle control system is configured to operate the second motor (3) at a driving force above said threshold value to compensate for a deficiency in the driving force resulting from a delay in augmentation of the driving force of the first motor (2).

2. The vehicle control system as claimed in claim 1,
wherein the vehicle comprises a booster (6, 7) that boosts a voltage applied to the motors (2, 3), and
wherein the vehicle control system is further configured to restrict a driving force to be generated by the first motor (2) to a smaller value by a reduction in a maximum voltage applied to the motor (2, 3) that is restricted by the booster (6, 7).

3. The vehicle control system as claimed in claim 1 or 2,
wherein the vehicle comprises a battery (8) that supplies electric power to the motors (2, 3), and
wherein the vehicle control system is further configured to calculate a maximum possible output of the battery (8), and to restrict a driving force to be generated by the first motor (2) to a smaller value when the maximum possible output of the battery (8) is below a threshold level.

4. The vehicle control system as claimed in claim 1, wherein the vehicle control system is further configured:
to obtain a driving force of the first motor (2) with reference to a predetermined map when starting the first motor (2) to power the vehicle by both motors (2, 3); and
to calculate a driving force of the second motor (3) based on the driving force of the first motor (2) obtained with reference to the map and the required driving force.

5. The vehicle control system as claimed in claim 4, wherein the map includes at least any of:
a map determining a relation between an output of the first motor (2) and an energy loss; and
a map determining the driving force to be generated by the first motor (2) to achieve the required driving force using the first motor (2) and the second motor (3) in combination.

## Patentansprüche

1. Fahrzeug, umfassend eine Kraftmaschine, wobei die Kraftmaschine (1) mindestens einen ersten Motor (2) und einen zweiten Motor (3) umfasst, und
ein Steuerungssystem, das dazu ausgebildet ist, die Auswahl eines Betriebsmodus aus einem ersten Modus, in dem das Fahrzeug durch beide Motoren (2, 3) angetrieben wird, und einem zweiten Modus, in dem das Fahrzeug nur durch den zweiten Motor (3) angetrieben wird, basierend auf einer erforderlichen Antriebskraft zu ermöglichen,
**dadurch gekennzeichnet, dass**:
das Fahrzeugsteuerungssystem dazu ausgebildet ist, den ersten Motor (2) zu starten, um den Betriebsmodus in den ersten Modus umzuschalten, wenn unter dem zweiten Modus ein Schwellenwert einer erforderlichen Antriebskraft überschritten wird,
der Schwellenwert auf weniger als eine maximale Antriebskraft eingestellt ist, die der zweite Motor (3), der das Fahrzeug antreibt, unter dem zweiten Modus zu erzeugen in der Lage ist, und dadurch, dass,
nach dem Umschalten in den ersten Modus, das Fahrzeugsteuerungssystem dazu ausgebildet ist, den zweiten Motor (3) mit einer Antriebskraft über dem Schwellenwert zu betreiben, um einen Mangel bei der Antriebskraft, der sich aus einer Verzögerung bei der Zunahme der Antriebskraft des ersten Motors (2) ergibt, zu kompensieren.

2. Fahrzeugsteuerungssystem nach Anspruch 1,
wobei das Fahrzeug einen Verstärker (6, 7) umfasst, der eine Spannung, die an die Motoren (2, 3) angelegt wird, verstärkt, und
wobei das Fahrzeugsteuerungssystem ferner dazu ausgebildet ist, durch eine Reduktion einer an den Motor (2, 3) angelegten Maximalspannung, die durch den Verstärker (6, 7) beschränkt wird, eine durch den ersten Motor (2) zu erzeugende Antriebskraft auf einen kleineren Wert zu beschränken.

3. Fahrzeugsteuerungssystem nach Anspruch 1 oder 2,
wobei das Fahrzeug eine Batterie (8) umfasst, die den Motoren (2, 3) elektrische Energie zuführt, und
wobei das Fahrzeugsteuerungssystem ferner dazu ausgebildet ist, eine maximal mögliche Abgabeleistung der Batterie (8) zu berechnen und eine durch den ersten Motor (2) zu erzeugende Antriebskraft auf einen kleineren Wert zu beschränken, wenn die maximal mögliche Abgabeleistung der Batterie (8) unter einem Schwellenpegel liegt.

4. Fahrzeugsteuerungssystem nach Anspruch 1, wobei das Fahrzeugsteuerungssystem ferner dazu ausgebildet ist:
eine Antriebskraft des ersten Motors (2) unter Bezugnahme auf ein vorgegebenes Kennfeld zu ermitteln, wenn der erste Motor (2) gestartet wird, um das Fahrzeug durch beide Motoren (2, 3) anzutreiben, und
eine Antriebskraft des zweiten Motors (3) basierend auf der Antriebskraft des ersten Motors (2), die unter Bezugnahme auf das Kennfeld ermittelt wird, und der erforderlichen Antriebskraft zu berechnen.

5. Fahrzeugsteuerungssystem nach Anspruch 4, wobei das Kennfeld mindestens eines umfasst aus der Gruppe umfassend:
ein Kennfeld, das eine Beziehung zwischen einer Ausgangsleistung des ersten Motors (2) und einem Energieverlust bestimmt, und
ein Kennfeld, das die durch den ersten Motor (2) zu erzeugende Antriebskraft, um durch Verwendung des ersten Motors (2) und des zweiten Motors (3) in Kombination die erforderliche Antriebskraft zu erzielen, bestimmt.

## Revendications

1. Véhicule comportant un groupe motopropulseur, le groupe motopropulseur (1) comprenant au moins un premier moteur (2) et un deuxième moteur (3) ; et
un système de commande configuré pour permettre une sélection d'un mode de fonctionnement à partir d'un premier mode où le véhicule est motorisé par les deux moteurs (2, 3) et un deuxième mode où le véhicule est motorisé seulement par le deuxième moteur (3), sur la base d'une force d'entraînement exigée,
**caractérisé en ce que** :
le système de commande de véhicule est configuré pour démarrer le premier moteur (2) pour déplacer le mode de fonctionnement vers le premier mode quand une valeur de seuil d'une force d'entraînement exigée dans le deuxième mode est dépassée ;
la valeur de seuil est établie en dessous d'une force d'entraînement maximum que le deuxième moteur (3) qui propulse le véhicule est capable de générer dans le deuxième mode ; et **en ce que**
à la suite du déplacement vers le premier mode, le système de commande de véhicule est configuré pour faire fonctionner le deuxième moteur (3) à une force d'entraînement au-dessus de ladite valeur de seuil pour compenser une insuffisance dans la force d'entraînement qui résulte d'un retard dans l'augmentation de la force d'entraînement du premier moteur (2).

2. Système de commande de véhicule selon la revendication 1,
dans lequel le véhicule comporte un survolteur (6, 7) qui amplifie une tension appliquée sur les moteurs (2, 3), et
dans lequel le système de commande de véhicule est en outre configuré pour limiter une force d'entraînement devant être générée par le premier moteur (2) à une plus petite valeur par une réduction d'une tension maximum appliquée sur le moteur (2, 3) qui est limitée par le survolteur (6, 7).

3. Système de commande de véhicule selon la revendication 1 ou 2,
dans lequel le véhicule comporte une batterie (8) qui délivre de l'énergie électrique aux moteurs (2, 3), et
dans lequel le système de commande de véhicule est en outre configuré pour calculer une sortie possible maximum de la batterie (8), et pour limiter une force d'entraînement devant être générée par le premier moteur (2) à une plus petite valeur quand la sortie possible maximum de la batterie (8) est en dessous d'un niveau de seuil.

4. Système de commande de véhicule selon la revendication 1, dans lequel le système de commande de véhicule est en outre configuré :
pour obtenir une force d'entraînement du premier moteur (2) en se référant à une carte prédéterminée lors du démarrage du premier moteur (2) pour motoriser le véhicule avec les deux moteurs (2, 3) ; et
pour calculer une force d'entraînement du deuxième moteur (3) sur la base de la force d'entraînement du premier moteur (2) obtenu en se référant à la carte et à la force d'entraînement requise.

5. Système de commande de véhicule selon la revendication 4, dans lequel la carte comprend au moins l'une quelconque de :
une carte déterminant une relation entre une sortie du premier moteur (2) et une perte d'énergie ; et
une carte déterminant la force d'entraînement devant être générée par le premier moteur (2) pour obtenir la force d'entraînement requise en utilisant le premier moteur (2) et le deuxième moteur (3) en combinaison.
